# EUROPEAN PATENT SPECIFICATION

(11) **EP 1 243 559 B1**
(45) Date of publication and mention of the grant of the patent: **21.03.2007**
(21) Application number: 01121107.5
(22) Date of filing: 03.09.2001
(51) Int. Cl.: B03C 1/01, B01D 33/073, B01D 33/48, B01D 33/50, B01D 33/76, B01D 35/06, B01D 61/16, B01D 63/16, B03C 1/14, B03C 1/30, C02F 1/44, C02F 1/48

(54) **Magnetic membrane separator**
Magnetabscheider mit Membran
Séparateur magnétique à membrane

(30) Priority: 19.03.2001 JP 2001078315
(43) Date of publication of application: 25.09.2002
(73) Proprietor: Hitachi Plant Technologies, Ltd., Chiyoda-ku Tokyo 101-0047 (JP)
(72) Inventor: Saho, Norihide, c/o Hitachi, Ltd., Chiyoda-ku, Tokyo 100-8220 (JP); Mizumori, Takashi, c/o Hitachi, Ltd., Chiyoda-ku, Tokyo 100-8220 (JP); Nishijima, Noriyo, c/o Hitachi, Ltd., Chiyoda-ku, Tokyo 100-8220 (JP)
(74) Representative: Finck, Dieter

(56) References cited:
- EP-A- 0 931 593
- EP-A- 1 097 905
- US-A- 4 039 447
- US-A- 5 944 986
- US-A- 6 099 738

## Description

### BACKGROUND OF THE INVENTION

The present invention relates to a magnetic separator for water purification and solid-liquid separation. More particularly, the present invention relates to a magnetic separator to achieve its object by catching magnetic substances suspending in raw water by means of a water permeating membrane, scraping off the caught magnetic substances from the membrane, magnetically catching the scraped magnetic substances, and finally discharging them.

There are many types of clarification devices for solid-liquid separation. One of them is US 4 039 447, from which is known a waste water treatment apparatus comprising a plurality of rotary magnetic discs connected to a rotary shaft extending through two chambers of a tank, and a scraper means disposed in close adjacency to each of the rotary magnetic discs for scraping off material which has been deposited on the magnetic discs. Such material is magnetic powder co-flocculated with suspended solids from the waste water on the discs in a large chamber and magnetic powder alone on the discs in a small chamber. Such a waster water treatment apparatus, where ferromagnetic powder is added to the waste water and solids suspended in the waste water are formed into coagulated flocs and the flocs are magnetically attracted and deposited on magnet plates, allows to remove the solids from the waste water, thereby purifying the waste water. The magnetic powder can be recovered for reuse.

Another device, which employs a fine mesh screen to separate and remove particles, is mentioned in "Yousui to Haisui" (Service water and Waste water), vol. 23, No. 9, 43-52, 1981. This clarification device is characterized by its filter which is made of magnetic woolly fine wires of stainless steel and is placed in a space where there exists a magnetic field. The filter permits raw water to flow, giving rise to purified water, while catching and separating pollutants (such as water bloom and organic matter) having a projected area (or diameter) larger than the opening of the filter mesh. After continued filtration pollutants accumulate on the filter to increase the flow resistance which greatly decreases the flow rate. One way for recovery is to stop supplying raw water and wash the filter (or remove accumulated pollutants from the filter) by flowing purified water in the reverse direction. Washings containing removed pollutants are removed from the system, and operation is resumed by using the cleaned filter.

If pollutants having a projected area (or diameter) smaller than the mesh opening are to be separated, it is necessary to incorporate raw water with a magnetic powder and a coagulant, such as aluminum sulfate, poly aluminum chloride, and poly ferric sulfate, which gives off aluminum ions and iron ions. Upon stirring, the magnetic powder and coagulant combine with pollutants (such as suspending solids, algae, fungi, and microorganisms) to give magnetic flocs approximately hundreds of micrometers in size. Such flocs can be efficiently caught by a filter having a mesh diameter as large as tens of micrometers. Therefore, filtration in this manner yields high-quality purified water. Filter cleaning is accomplished in the same way as mentioned above. Sludge is finally incinerated, dumped, or composted.

The disadvantage of the conventional technology is that sludge contains a large amount of water because water purification involves the filter cleaning (or removal of accumulated pollutants) with purified water which gives rise to a mixture of purified water and separated pollutants which is separated from the system afterward.

Sludge as it is after separation from the system contains water as much as about 99.5%. It is also 30 times as bulky as partly dewatered sludge containing 85% water. Therefore, water content in sludge should be reduced before disposal; about 85% for sludge to be transported without water leakage by a truck to an incinerator or dumping site, and about 75% for sludge to be composted (this water content is necessary for microorganisms to actively decompose organic matter). Dewatering for this purpose is accomplished by means of a centrifuge or belt press. The dewatering apparatus should have a large capacity in proportion to water content in sludge. This leads to a high investment and operating cost.

Another disadvantage of the conventional water purification is the necessity of occasional filter cleaning which prevents continuous filtration and hence lowers the capacity of water purification. As mentioned above, filter cleaning is accomplished by flowing purified water in the reverse direction to remove pollutants accumulating on the filter. Filter cleaning gives rise to sludge composed of purified water and pollutants removed from the filter. Filtration is resumed by using the cleaned filter.

Moreover, the conventional apparatus for water purification which has a merely flat filter becomes large in size if the filter is enlarged to permit more water to pass through it.

### SUAMMARY OF THE INVENITON

The present invention was completed to address the foregoing problems. It is an object of the present invention to provide a magnetic separator which efficiently and certainly separates a large amount of pollutants from raw water and discharges separated pollutants in the form of concentrated sludge with a low water content.

The invention to achieve the above-mentioned object is typically directed to a magnetic separator which comprises a means to filter raw water containing magnetic suspended solids, the filtering means having openings too small for the suspended solids to pass through, a means to wash out and remove filtered solids from the filtering means by fluid force, a means to transfer removed solids to a means to generate a magnetic field, the means to generate a magnetic field to be applied to magnetic solids transferred by the transfer means, a means to capture the transferred magnetic solids and to move the captured solids from the part where there exists a strong magnetic field generated by the magnetic field generating means to the part where there exists a weak magnetic field generated by the magnetic field generating means, a means to scrape off the captured magnetic solids, which have been transferred to the part where there exists a weak magnetic field, from the capturing and moving means, and a means to recover the scraped solids.

### BRIEF DESCRIPTION OF THE DRAWINGS

Fig. 1 is a block diagram showing a magnetic separator and its peripheral equipment in Example 1 of the present invention.
Fig. 2 is a vertical sectional view showing the magnetic separator in Fig. 1.
Fig. 3 is a sectional plan view showing important parts of the magnetic separator in Fig. 2.
Fig. 4 is a front view showing a membrane unit of the magnetic separator in Fig. 2.
Fig. 5 is a front view showing a frame of the membrane unit in Fig. 4.
Fig. 6 is a front view showing a packing used to mount the membrane unit in Fig. 4.
Fig. 7 is a front view showing one membrane unit used in Example 2 of the present invention.
Fig. 8 is a front view showing another membrane unit used in Example 2.
Fig. 9 is a front view showing a space frame used in Example 2.
Fig. 10 is a vertical sectional view showing one way in which a magnetic separator in Example 3 of the present invention works in the vicinity of the magnets.
Fig. 11 is a vertical sectional view showing another way in which the magnetic separator in Example 3 works in the vicinity of the magnets.
Fig. 12 is a block diagram showing the apparatus for preparing a seeding agent to be used for a magnetic separator in Example 4 of the present invention.
Fig. 13 is a vertical sectional view showing a magnetic separator in Example 5 of the present invention.
Fig. 14 is a sectional plan view showing important parts of the magnetic separator in Fig. 13.
Fig. 15 is a vertical sectional view showing a magnetic separator in Example 6 of the present invention.
Fig. 16 is a sectional plan view showing important parts of the magnetic separator in Fig. 15.
Fig. 17 is a vertical sectional view showing a magnetic separator in Example 7 of the present invention.
Fig. 18 is a sectional view taken along the line X-X in the direction of arrows in Fig. 17.
Fig. 19 is a vertical sectional view showing a magnetic separator in Example 8 of the present invention.

### DESCRIPTION OF THE PREFERRED EMBODIMENTS

The invention will be described in more detail with reference to the following preferred embodiment. Before filtration by a magnetic separator of the present invention, raw water is incorporated with a magnetic powder and a coagulant, such as aluminum sulfate, poly aluminum chloride, and poly ferric sulfate, which gives off aluminum ions and iron ions. Upon stirring, the magnetic powder and coagulant combine with pollutants (such as suspending solids, algae, fungi, and microorganisms) to give magnetic flocs approximately hundreds of micrometers in size. Alternatively, raw water is incorporated with a substance which yields magnetic particles by chemical reaction, so that such magnetic particles adsorb pollutants (such as suspending solids, algae, fungi, and microorganisms) to give magnetic flocs approximately hundreds of micrometers in size. Alternatively, raw water is stirred in the presence of aluminum or iron electrodes, so that aluminum ions or iron ions are generated by electrochemical reaction. Raw water containing ions is incorporated with a magnetic powder and coagulant which combine with pollutants (such as suspending solids, algae, fungi, and microorganisms) to give magnetic flocs approximately hundreds of micrometers in size. The resulting magnetic flocs do not pass through openings having a size of tens of micrometers. Thus filtration in this manner efficiently removes pollutants from raw water and the resulting filtrate is purified water of high quality.

The magnetic separator of the present invention has a plurality of rotating drum-like filter units, each carrying perforated membranes on its both sides and circumference. The filter units are arranged in the axial direction of the rotating shaft. The membrane below the level of raw water collects magnetic flocs, and the membrane carrying magnetic flocs moves above the level of raw water. The magnetic flocs which have emerged from raw water are washed out and removed from the membrane by washing water jetted out from nozzles arranged inside the filter unit. The removed magnetic flocs are transferred by a transfer means to a magnetic field generating means.

The magnetic field generating means is arranged at the level of raw water and surrounded by a moving catcher. The magnetic flocs transferred by the transfer means move to the moving catcher due to the magnetic action given by the magnetic field generating means, and the magnetic flocs are attracted to the moving catcher. The magnetic force partly squeezes out excess water (which is a non-magnetic substance) from the magnetic flocs. Squeezed water separates from the magnetic flocs and flows down by gravity along the surface of the moving catcher. Thus the water content in the magnetic flocs decreases. Moreover, the magnetic force magnetically compresses the magnetic flocs on the surface of the moving catcher. This action forces out excess water from the magnetic flocs, thereby further reducing the water content in the magnetic flocs to, say, about 95%.

The moving catcher moves in the direction away from the magnetic field generating means. When the moving catcher has moved to a place where the magnetic field is weak, the magnetic flocs are scraped off by a spatula or the like from the surface of the moving catcher. The scraped magnetic flocs (now called sludge) are removed from the separator.

Finally, the membrane is restored by washing water and immerged again below the level of raw water. The moving catcher (with the magnetic flocs scraped off) is restored and moved toward the magnetic field generating means so that it collects magnetic flocs. Incidentally, the washing water is supplied by pumping the water which has passed through the membrane.

The magnetic separator constructed as mentioned above can remove water while magnetic flocs are captured and moved by the magnetic field generating means and the moving catcher. It yields highly concentrated sludge containing about 95% water. This sludge has about one-tenth the volume of conventional sludge containing 99.5% water. (Conventional sludge is a mere mixture of flocs and washing water.) Water content in sludge should be reduced before disposal; about 85% for sludge to be transported without water leakage by a truck to an incinerator or dumping site, and about 75% for sludge to be composted (this water content is necessary for microorganisms to actively decompose organic matter). Dewatering for this purpose is accomplished by means of a centrifuge or belt press. Owing to this small volume, the recovered sludge only needs a dewatering machine which has one-tenth the capacity of the conventional dewatering machine. It also reduces the amount of water to be removed to one-tenth that in the conventional technology. This leads to reduction in investment and operating cost for dewatering.

Another advantage of the magnetic separator constructed as mentioned above is the ability to pass a large amount of raw water through the increased area of membrane and to certainly remove a large amount of accumulated magnetic flocs by the force of washing water and the ability to transfer a large amount of removed magnetic flocs by the transfer means to the magnetic field generating means and to efficiently discharge the magnetic flocs by using the magnetic field generating means and the moving catcher.

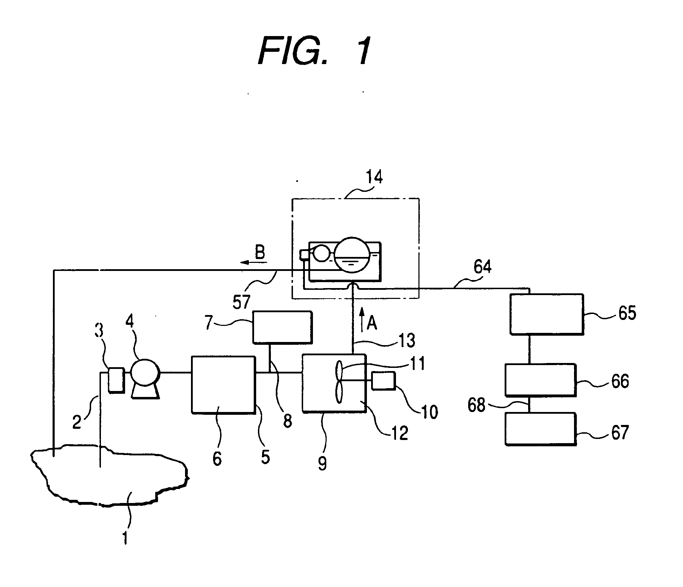

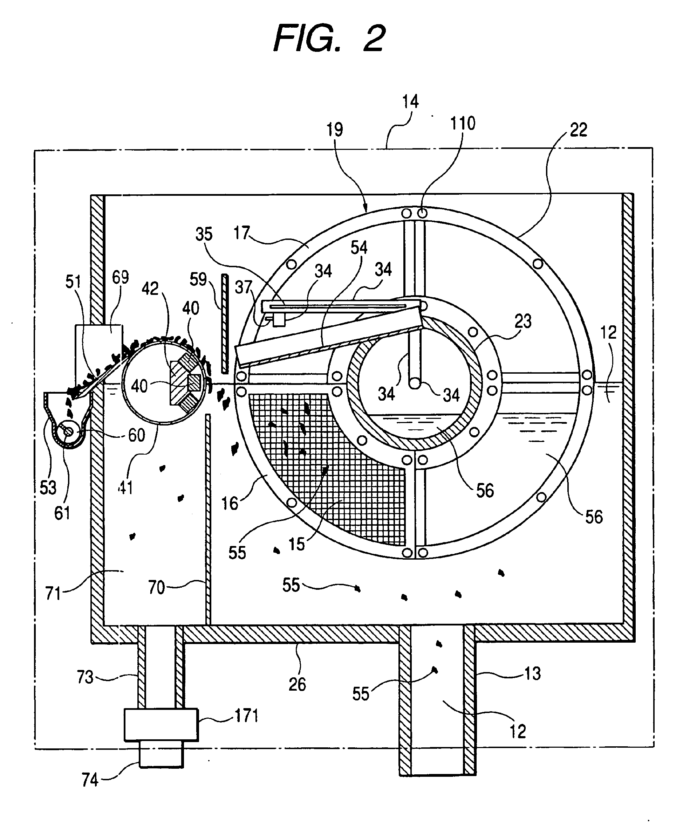

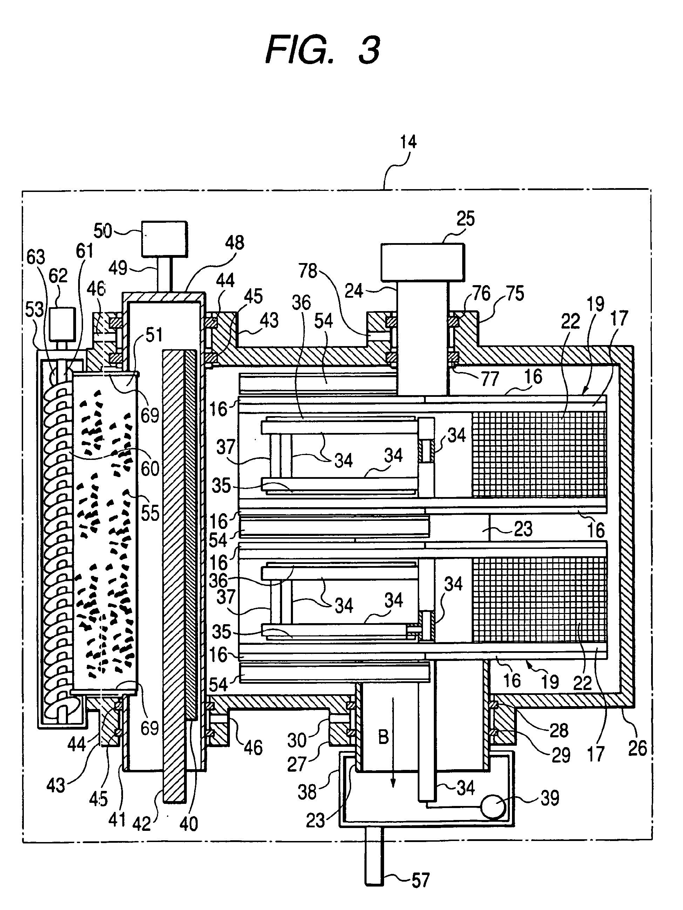

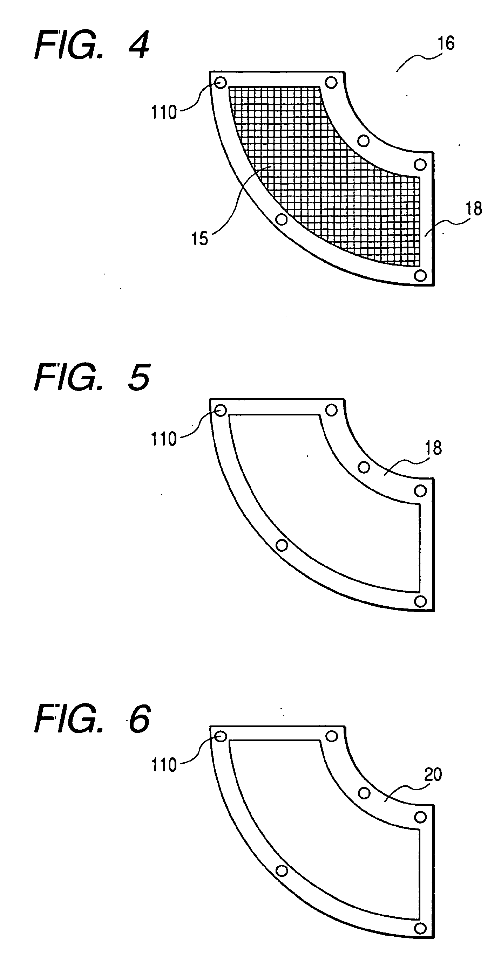

Some typical examples of the present invention will be explained with reference to the accompanying drawings. Example 1 of the present invention is illustrated in Figs. 1 to 6. Fig. 1 is a block diagram showing the magnetic separator and its peripheral equipment in Example 1. Fig. 2 is a vertical sectional view showing the magnetic separator in Fig. 1. Fig. 3 is a sectional plan view showing important parts of the magnetic separator in Fig. 2. Fig. 4 is a front view showing a membrane unit of the magnetic separator in Fig. 2. Fig. 5 is a front view showing a frame of the membrane unit in Fig. 4. Fig. 6 is a front view showing a packing used to mount the membrane unit in Fig. 4.

The magnetic separator of the present invention has peripheral equipment as shown in Fig. 1. A pump 4 draws up raw water to be purified from a water source (such as pond) 1 through a pipe 2 and a filter 3 to remove large solid wastes and sends it to a reservoir 5. A seeding agent preparing apparatus 7 supplies the raw water 6 with a magnetic powder (such as triiron tetraoxide), a pH controlling agent, a coagulant (such as poly aluminum chloride, iron chloride, and ferric sulfate) to give aluminum ions and iron ions, and a polymeric reinforcing agent, through a pipe 8. The raw water mixed with the coagulant etc. enters a stirring vessel 9, which is provided with a mixing blade 11 driven by a motor 10. Stirring yields pretreated water 12 which contains magnetic flocs about hundreds of micrometers to several millimeters in size. The pretreated water 12 is introduced into the magnetic separator 14 through a pipe 13 as indicated by the arrow A.

The magnetic separator 14 is constructed as shown in Figs. 2 and 3. It has a plurality of membrane units 16, each unit being constructed of a water permeable membrane 15 and a frame 18 as shown in Fig. 4. The membrane 15 is a net composed of fine stainless steel or copper wire or polyester fiber, with a mesh size of a few micrometers to tens of micrometers. The membrane 15 looks like a quartered circle. The membrane 15 has its periphery held between the frames 18 (as shown in Fig. 5) and hermetically sealed with an adhesive such as epoxy resin.

The membrane unit 16 is screwed to both sides of the filter unit body 17, with a hermetical packing 20 (as shown in Fig. 6) interposed between them. To be concrete, the membrane units 16 are fixed by screws driven into screw holes 110 such that they cover the openings on both sides of the filter unit body 17. Incidentally, Fig. 2 shows only one membrane unit 16. In actual, however, four membrane units 16 entirely cover the side of the filter unit body 17. The filter unit body 17 is a hollow drum-like frame structure with open circumference and sides.

The filter unit body 17 has its circumference entirely covered with a membrane 22. The membrane 22, which is similar to the membrane 15, is a net composed of fine stainless steel or copper wire or polyester fiber, with a mesh size of a few micrometers to tens of micrometers. The membrane units 16 (having the membrane 15), the filter unit body 17, and the membrane 22 constitute a drum-like filter unit 19. This construction provides a large filtering area and hence contributes to a large capacity of water purification.

More than one filter unit 19 are rotatably mounted on a horizontal hollow shaft 23 (two units in this example). The hollow shaft 23 penetrates the center of the filter units 19. It has one end connected to a rod 24 and the other end inserted into a sleeve 27 of an outer vessel 26. The rod 24 is inserted into and held by a sleeve 75 of the outer vessel 26. It has one end (projecting outside the outer vessel 26) connected to the rotating shaft of a motor 25.

The rod 24 is held in the sleeve 75 of the outer vessel 26 in such a way that it hermetically rotates with the help of ring sliders 76 and 77 made of low-friction polymeric material. The other end of the hollow shaft 23 is held in the sleeve 27 of the outer vessel 26 in such a way that it hermetically rotates with the help of ring sliders 28 and 29 made of low-friction polymeric material. Also, the other end of the hollow shaft 23 opens outside the sleeve 27 of the outer vessel 26.

The sleeve 27 has a water inlet 30 through which water is introduced into a space between the sliders 28 and 29, the water being slightly pressurized more than the pretreated water 12 in the outer vessel 26. Introduction of pressurized water may be accomplished by connecting the water inlet 30 to a reservoir (not shown) which is placed above the level of the pretreated water 12 in the outer vessel 26 and is supplied with part of purified water 56 by pumping. Similarly, the sleeve 75 has a water inlet 78 through which water is introduced into a space between the sliders 76 and 77, the water being slightly pressurized more than the pretreated water 12 in the outer vessel 26. This structure improves watertightness more.

The motor 25 turns the hollow shaft 23 through the rod 24. As the result, the filter unit 19 turns around the horizontal shaft. The filter unit 19 is arranged such that its middle line coincides with the level of the pretreated water 12. In other words, it turns in such a way that its lower half is immersed in the pretreated water 12 and its upper half is exposed to the atmosphere.

In the hollow shaft 23 is the central washing water pipe 34 which extends coaxially with the hollow shaft 23. A central washing water pipe 34 has the radially branched washing water pipes 34 which penetrate the hollow shaft 23 and communicate with washing nozzles 35 to 37 arranged inside the membranes 15 and 22. The washing water pipe 34 is connected to a pump 39 which draws up part of the purified water collected in the water vessel 38 to receive the purified water discharged from the hollow shaft 23. The washing nozzles 35 to 37 are arranged inside the filter unit 19. The washing nozzles 35 and 36 are positioned above the level of the pretreated water 12 such that they jet out washing water over the entire width in radial direction of the membrane 15 on both sides. The washing nozzle 37 is positioned above the level of the pretreated water 12 such that it jets out washing water over the entire width in axial direction of the membrane 22 on the circumference.

The washing water pipe 34 is supplied with washing water from the water vessel 38 by the pump 39, and the washing nozzles 35 to 37 jet out washing water toward the membranes 15 and 22. Thus, washing water removes the magnetic flocs 55 which have accumulated on the membrane 15 and 22. This washing is carried out continuously as the filter unit 19 turns. During one turn, the membrane is washed once by washing water jetting out from the washing nozzles 35 to 37. This washing means is constructed of the pump 39, the washing water pipes 34, and the washing nozzles 35 to 37.

The magnetic separator 14 has a cylindrical body 41 of non-magnetic stainless steel or plastics, with its ends inserted into a sleeves 43 of the outer vessel 26 and rotatably and hermetically supported by ring sliders 44 and 45 made of low-friction polymeric material. As with the sleeves 27 and 75 mentioned above, the sleeve 43 has a water inlet 46 through which water is introduced into a space between the sliders 44 and 45, the water being slightly pressurized more than the pretreated water 12 in the outer vessel 26.

The cylindrical body 41 has at its one end a flange 48 which is connected to a rod 49. The rod 49 is attached to the rotating shaft of a motor 50, so that the cylindrical body 41 is turned by the motor 50. The cylindrical body 41 is rotatably arranged such that its axis is parallel to the axis of the filter unit 19 at the same height, with its lower half immersed in the pretreated water 12.

The magnetic separator 14 has the magnetic field generating means consisting of magnets 40. Each magnet 40 is a high-temperature superconducting bulk magnet or a superconducting race track coil magnet. These magnets 40 are fixed to a supporter 42 within the cylindrical body 41. The magnets 40 are placed close to the cylindrical body 41 and at the level of the pretreated water 12. Because of this arrangement, the cylindrical body 41 generates a strong magnetic field at its part close to the magnets 40 and a weak magnetic field at its parts away from the magnets 40. Incidentally, the supporter 42 to which the magnets 40 are fixed is inserted into the cylindrical body 41 from its one end and is fixed to the outer vessel through a supporting means (not shown).

The magnetic separator 14 has the scraping means which is a flat spatula 51. The spatula 51 is fixed to the outer vessel 26 through an elastic body (such as spring), such that one end thereof lightly touches that part of the surface of the cylindrical body 41 where there exists a weak magnetic field and the other end thereof is above a sludge vessel 53. The spatula 51 has side walls 69 attached to both ends thereof. The side walls 69 prevent sludge from leaking into the pretreated water 12. The spatula 51 and the side walls 69 are watertight for the pretreated water. Incidentally, the spatula 15 should preferably have a tip made of hard rubber.

Between the two filter units 19 and between the filter unit 19 and the outer vessel 26 is placed a gutter 54 which is fixed to the outer vessel 26 through a supporting member. The gutter 54 functions as the transfer means. It is positioned above the level of the pretreated water 12 and is positioned slightly below the washing water pipes 34 and 35. It extends slightly beyond both ends of the washing water pipes 34 and 35. It is inclined so that it transfers to the vicinity of the cylindrical body 41 the washing water which has been used to wash the membrane 15 and magnetic flocs 55 which has been scraped off.

The transfer means contains a water protecting board 59, which is positioned between the filter unit 19 and the cylindrical body 41 and opposite to the washing nozzle 37. The water protecting board 59 prevents the spray from the washing nozzle 37 from falling on the cylindrical body 41. It also transfers the scraped magnetic flocs 55 to the vicinity of the cylindrical body 41.

During operation, the pretreated water enters the outer vessel 26 (outside the filter unit 19) through the pipe 13 connected to the bottom of the outer vessel 26 and then enters the filter unit 19 through the membranes 15 and 22. At this time, the pretreated water is separated into the magnetic flocs 55 which are caught by the membranes 15 and 22 and the purified water which passes through the membranes 15 and 22. The purified water 56 is discharged from the outer vessel 26 through the hollow shaft 23 as indicated by the arrow B in Fig. 3. The purified water 56 thus discharged is stored temporarily in the water vessel 38 and then returned to the pond 1 through a pipe 57. The pretreated water 12 passes through the membranes 15 and 22 due to difference between the level of the pretreated water 12 and the level of the purified water 56.

While the filter unit 19 rotates clockwise with its lower half immersed in the pretreated water 12 as shown in Fig. 2, the magnetic flocs 55 accumulate on the membranes 15 and 22 of the filter unit 19. The accumulated flocs emerge from the pretreated water 12 as the filter unit 19 rotates further. While moving in the atmosphere above the level of the pretreated water 12, the accumulated flocs are washed out by water sprayed from the washing nozzles 35 to 37. In this way the magnetic flocs 55 are removed from the membranes 15 and 22 which have moved above the level of the pretreated water.

After removal from the membranes 15 and 22, the magnetic flocs 55 are transferred by the gutter 54 and the water protecting board 59 to that part of the surface of the pretreated water 12 which is close to that part of the cylindrical body 41 which is closed to the magnets 40. In other words, the magnetic flocs removed from the membrane 15 on both sides of the filter unit 19 are transferred together with purified water to the vicinity of the cylindrical body 41 through the gutter 54, and the magnetic flocs removed from the membrane 22 on the circumference of the filter unit 19 are transferred together with purified water to the pretreated water 12 close to the cylindrical body 41 after they have impinged upon the water protecting board 59. It is to be noted that the magnetic flocs 55 removed from the membrane 15 do not fall on the surface of the pretreated water 12 just under the part where the magnetic flocs 55 have been removed and hence the removed flocs do not clog the membrane due to repeated filtration. Therefore, the membrane 15 keeps a high flow rate and the filter unit 19 has a high purifying capacity.

The magnetic flocs 55, which have been transferred to that part of the surface of the pretreated water 12 which is close to that part of the cylindrical body 41 which is close to the magnets 40, are rapidly attracted toward the magnets 4 0 generating a magnetic field of 0.5 tesla. Thus the magnetic flocs 55 stick to the surface of the cylindrical body 41 of non-magnetic stainless steel or plastics which rotates around the magnets 40. In this way the magnetic flocs 55 removed from the membranes 15 and 22 are transferred by the gutter 54 and the water protecting board 59 and are caused to stick to the surface of the cylindrical body 41.

The magnetic flocs 55 which have stuck to the surface of the cylindrical body 41 (which rotates counterclockwise) emerge from the pretreated water, as shown in Fig. 2. At this time, excess water in the magnetic flocs drop down or flow down on the surface of the cylindrical body 41 by gravity. Thus the magnetic flocs 55 become concentrated. Moreover, the magnetic flocs 55 are concentrated also by compression due to magnetic force exerted by the magnets 40. Concentration of the magnetic flocs 55 is ensured by the water protecting board 59 which prevents sprayed water from the washing nozzle 37 from falling on the magnetic flocs 55 sticking to the cylindrical body 41. The procedure mentioned above reduces the water content in the magnetic flocs 55 to about 95% with a small amount of energy to run the motor 50.

The concentrated magnetic flocs 55 on the cylindrical body 41 move away from the magnets 40 as the cylindrical body 41 rotates. At the position where the magnetic force due to the magnets 40 is small, the magnetic flocs 55 are scraped off from the surface of the cylindrical body 41 by the flat spatula 51. The scraped flocs 55 (as sludge) are collected in the sludge vessel 53. The sludge in the sludge vessel 53 is transferred backward and discharged from an outlet 63 by means of a screw conveyer (consisting of blades 60 and a rod 61 connected thereto) which is driven by the motor 62.

The discharged sludge is transferred through a pipe 64 to a sludge vessel 65 for storage, as shown in Fig. 1. Subsequently, the sludge is concentrated by a dewatering means 66 (such as centrifuge and belt press) so that its water content is reduced to about 85% for easy transportation without water leakage or to about 75% for easy composting by microorganisms to decompose organic matter. The concentrated sludge is moved from the sludge vessel 65 to dumping sites or incinerators by trucks. Alternatively, it is transferred to a composting vessel 67 through the passage 68. If necessary, the resulting compost is crushed and the magnetic powder is recovered by means of a magnetic separator.

When the pretreated water 12 is formed, some suspended solids remain without being caught in the magnetic flocs 55. Such non-magnetic solids are also filtered off by the membranes 15 and 22 and then returned to the pretreated water 12 by the purified water. The thus returned non-magnetic solids settle down at the bottom of a vessel 71 under the cylindrical body 40. The vessel 71 is formed by a wall 70. They are periodically sucked up from an outlet 73 by a pump 171 and returned to the up-stream of the raw water reservoir 5 through a pipe 74. They are made into the magnetic flocs 55, which are subsequently separated by magnetic force as mentioned above.

The above-mentioned example produces the following effects. The drum-like filter unit 19 has a large filtering area and a large water-purifying capacity because it is provided with the membrane 22 on its circumference as well as the membrane 15 on its side. The filter unit has a large filtering area and large water-purifying capacity because it is provided with the membranes 15 on its both sides. The water-purifying capacity is greatly increased by arranging more than one filter unit 19 side by side. The magnetic flocs 55 removed from the membrane 15 of the filter unit 19 are introduced to the magnetic field of the magnets 40 by the gutter 54, without falling on the surface of the pretreated water 12 which is just below the part where they have been removed. This permits the membrane 15 to rapidly pass water, which leads to a large water-purifying capacity. The magnetic flocs 40 are attracted to the vicinity of the magnets 40 and caught on the surface of the rotating cylindrical body 41. They are separated and recovered in the form of concentrated sludge containing about 95% water. This sludge has one-tenth the volume of conventional water-washed sludge containing 99.5% water. Owing to this small volume, the recovered sludge only needs a dewatering machine which has one-tenth the capacity of the conventional dewatering machine. It also reduces the amount of water to be removed before transportation for dumping or incineration or composting. This leads to reduction in investment and operating cost for dewatering.

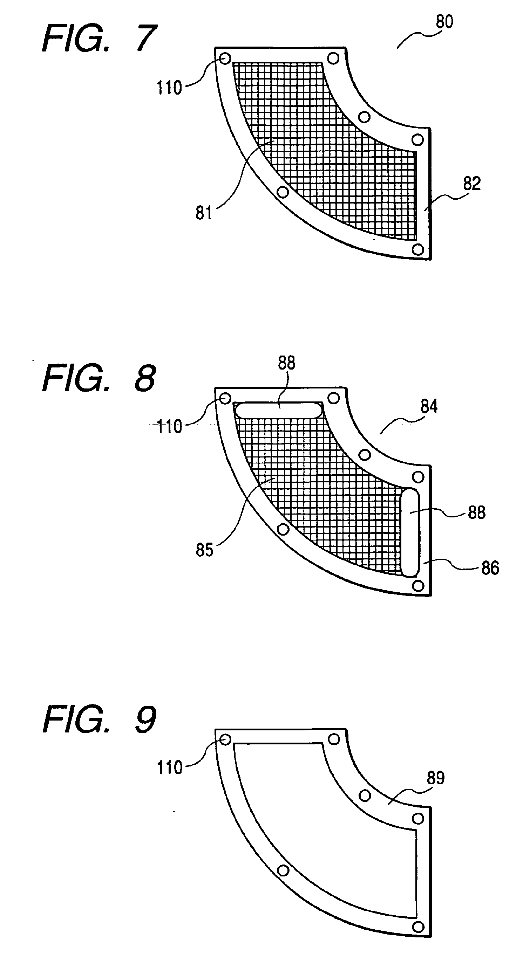

Example 2 of the present invention is explained below with reference to Figs. 7 to 9, which are front views showing respectively one membrane unit, another membrane unit, and space frame which are used therein.

Example 2 differs from Example 1 in the following. The membrane unit is constructed of two kinds of membrane units 80 and 84 having respectively membranes 81 and 85 which differ in mesh size. The membrane unit 80 consists of a membrane 81 having a mesh size of tens of micrometers and two unit frames 82 holing the membrane 81 between them. The membrane unit 84 consists of a membrane 85 having a mesh size of hundreds of micrometers and two unit frames 86 holing the membrane 85 between them, each membrane 85 having openings 88 inside of unit frame 86. The membrane units 80 and 84 are screwed to the side of the filter unit body 17, with the latter out. Between the two membrane units 80 and 84 is placed the space frame 89, a few millimeters to tens of millimeters in thickness. Between the filter unit body 17 and the membrane unit 80 is inserted the watertight packing 20.

The advantage of this example 2 is that the membrane 85 catches the magnetic flocs 55 of large size but passes the magnetic flocs 55 of small size and the membrane 81 catches the magnetic flocs 55 of small size that have passed the membrane 81. Filtration in this way extends time required for the surface of the membrane 81 to be covered with the magnetic flocs 55. The membrane 85 having a large mesh size permits water to pass through by far more rapidly than the membrane 81. Therefore, the average flow rate of the membranes 81 and 85 in combination is high. In the washing step, the washing water is sprayed from inside toward the membrane 81 so that the membranes 81 and 85 are washed simultaneously. The washing water which has washed the membrane 81 is rapidly discharged through the openings 88. Washing in this way increases the amount of pretreated water to be filtered while keeping the washing capacity high. Incidentally, the above-mentioned membrane unit (consisting of two membranes differing in mesh size) may be arranged on the circumference of the drum-like filter unit. In this case, the resulting magnetic separator has a high treating capacity even though it is provided with only one filter unit.

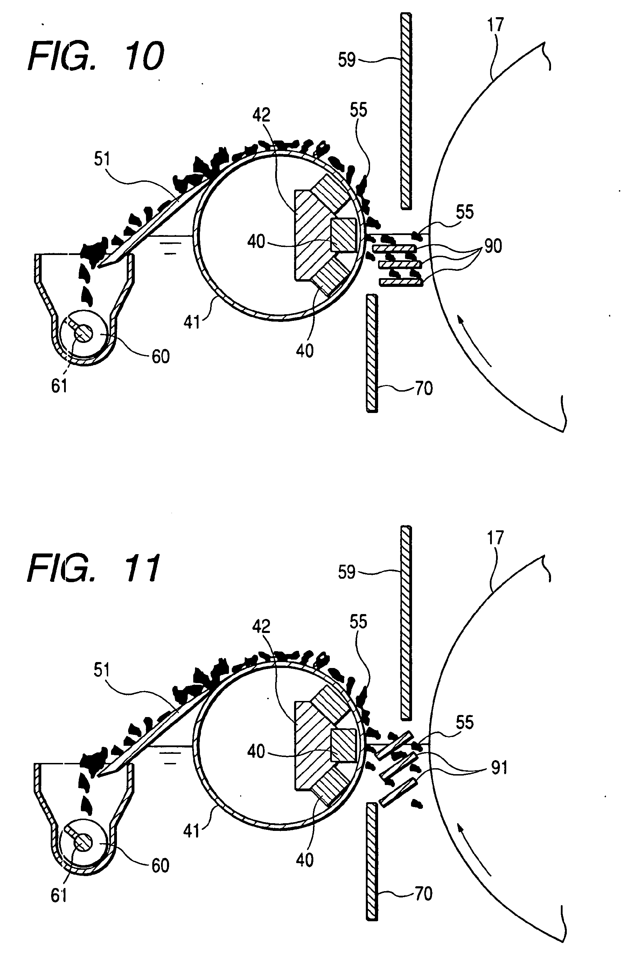

Example 3 of the present invention is explained below with reference to Figs. 10 and 11. Fig. 10 is a vertical sectional view showing one way in which a magnetic separator in this example 3 works in the vicinity of the magnets. Fig. 11 is a vertical sectional view showing another way in which the membrane separator in this example works in the vicinity of the magnets.

This example 3 differs from the foregoing Example 1 in the following. The magnetic separator in this example has a flow regulator 90 or 91 near that part of the periphery of the cylindrical body 41 which is close to the magnets 40 generating the magnetic field. To be concrete, the flow regulator 90 or 91 is placed between the cylindrical body 41 and the filter unit body 17 in such a way that the magnetic flocs 55 stick efficiently to the surface of the cylindrical body 41 by magnetic attraction. The flow regulator 90 or 91 alleviates turbulences in the vicinity of the magnets 40 and permits the magnetic flocs 55 to move smoothly toward the cylindrical body 41 by magnetic attractive force. The flow regulator 90 in Fig. 10 is arranged almost parallel to the water surface, but the flow regulator 91 in Fig. 11 is arranged aslant to the water surface. The latter is more effective than the former. Flow turbulence in the vicinity of the magnets 40 are caused by the rotation of the filter unit body 17 and the falling of the washing water. The flow regulator 90 or 91 alleviates such turbulences and permits the magnetic flocs 55 to smoothly move by magnetic force of the magnets 40 for their efficient separation. In addition, the flow regulator 90 or 91 should preferably be made of a non-magnetic material, and it may be a wire mesh or perforated plate.

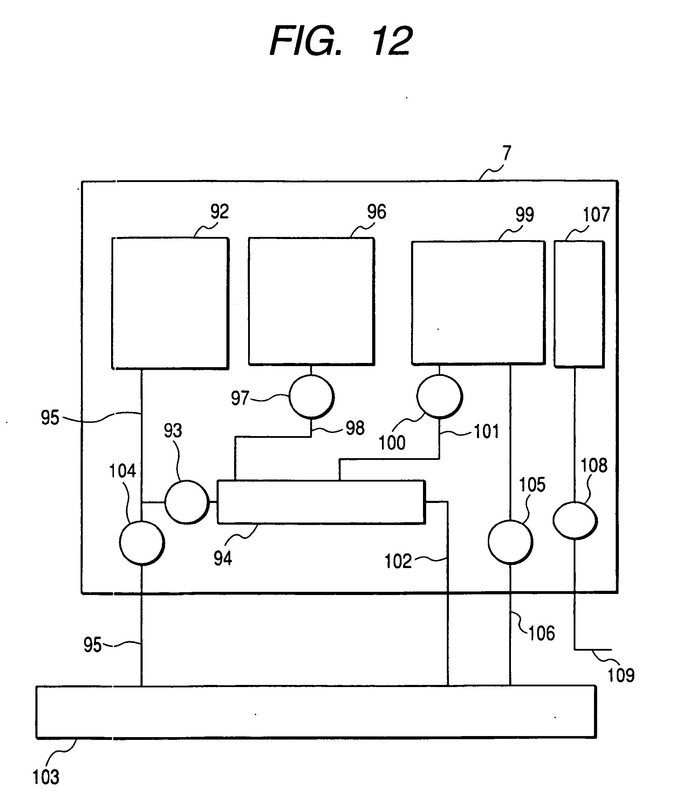

Example 4 of the present invention is illustrated in Fig. 12, which is a block diagram showing the apparatus for preparing a seeding agent to be used for a magnetic separator in this example 4. This example differs from the foregoing Example 1 in that an improvement is made on the seeding agent preparing apparatus 7.

Common practice in the conventional procedure is as follows. Acommercialmagnetic powder is made into a slurry with an adequate amount of water. The resulting slurry is kept stirred in a tank to prevent precipitation while being pumped into raw water. As the coagulant, an aqueous solution of poly(ferric sulfate) containing trivalent iron ions is added to raw water from a storage tank. A polymeric reinforcing agent in granular form is dissolved in water and the resulting solution is pumped into raw water from a storage tank. In the case where the magnetic powder is triiron tetraoxide, the resulting slurry becomes uneven because it easily settles down in the tank with insufficient stirring. As the result, the concentration of magnetic powder in raw water fluctuates and the magnetic flocs formed therefrom do not have sufficient magnetic force. Therefore, magnetic flocs cannot be recovered normally but excessively accumulate on the surface of the membrane. This leads to the clogging of the membrane, which greatly reduces the purifying capacity. On the other hand, vigorous stirring to avoid the foregoing trouble causes the magnetic powder to move outward by centrifugal force, making the distribution of the magnetic powder irregular in the tank. This poses the same problem as mentioned above.

In this example 4, the seeding agent preparing apparatus 7 is constructed as follows. Triiron tetraoxide as a magnetic powder is chemically formed in the following manner. A reaction vessel 94 is supplied with an aqueous solution of poly(ferric sulfate) as a coagulant from a tank 92 by a pump 93 through a pipe 95. The aqueous solution of poly ferric sulfate is acidic and gives trivalent iron ions. The reaction vessel 94 is also supplied with an aqueous solution of iron chloride from a tank 96 by a pump 97 through a pipe 98. The aqueous solution of iron chloride gives divalent iron ions. The reaction vessel 94 is also supplied with an aqueous solution of sodium hydroxide from a tank 99 by a pump 100 through a pipe 101. A chemical reaction takes place in the reaction vessel 94 between a 2:1 mixed solution of trivalent iron ions and divalent iron ions and an alkaline solution with pH 12 (approximately). This chemical reaction, represented by the following chemical equations, gives rise to ferromagnetic fine particles of triiron tetraoxide as an intermediate product.

nFe(OH)₃ ⇒ (FeO(OH)ₛ₋)ₙ + nH₂O

FeO(OH)ₛ₋ + FeOH⁺ ⇔ FeO(OH)(ₛ₋FeOH⁺)

Intermediates ⇒ Fe₃O₄

The magnetic fine particles are fed into a vessel 103 communicating with the stirring vessel 9 in which magnetic flocs are formed from the rawwater 6. The stirring vessel 9 is connected with the vessel 103 through a pipe 102. The vessel 103 is supplied with a prescribed amount of an aqueous solution of poly(ferric sulfate) as a coagulant from the storage tank 92 by a pump 104. If the raw water has a high pH value, the stirring vessel 9 is also supplied with a prescribed amount of sodium hydroxide solution from the storage tank 99 by a pump 105 through a pipe 106. They are stirred and mixed in the stirring vessel 9 so that fine magnetic flocs are formed. The stirring vessel 9 is further supplied with a prescribed amount of an aqueous solution of polymeric reinforcing agent from a storage tank 107 by a pump 108 through a pipe 109 connected to the middle of the stirring vessel 9. They are stirred and mixed to form large magnetic flocs from fine magnetic flocs.

The advantage of this example is that triiron tetraoxide can be formed in an exact amount by controlling the flow rate of the aqueous solutions of poly (ferric sulfate and iron chloride) fed into the reaction vessel 94. Thus the magnetic separator forms magnetic flocs uniformly and exhibits high purifying performance.

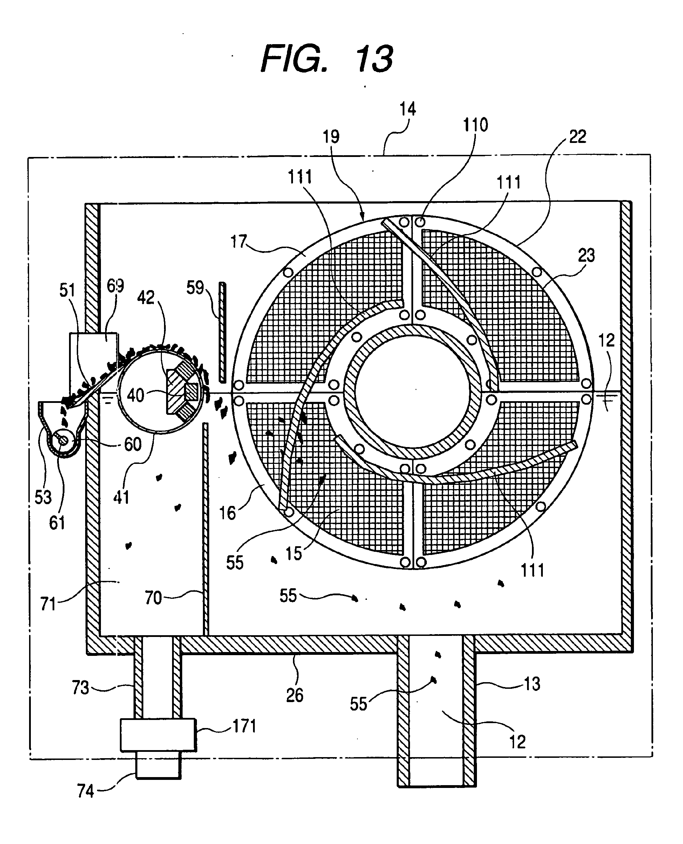

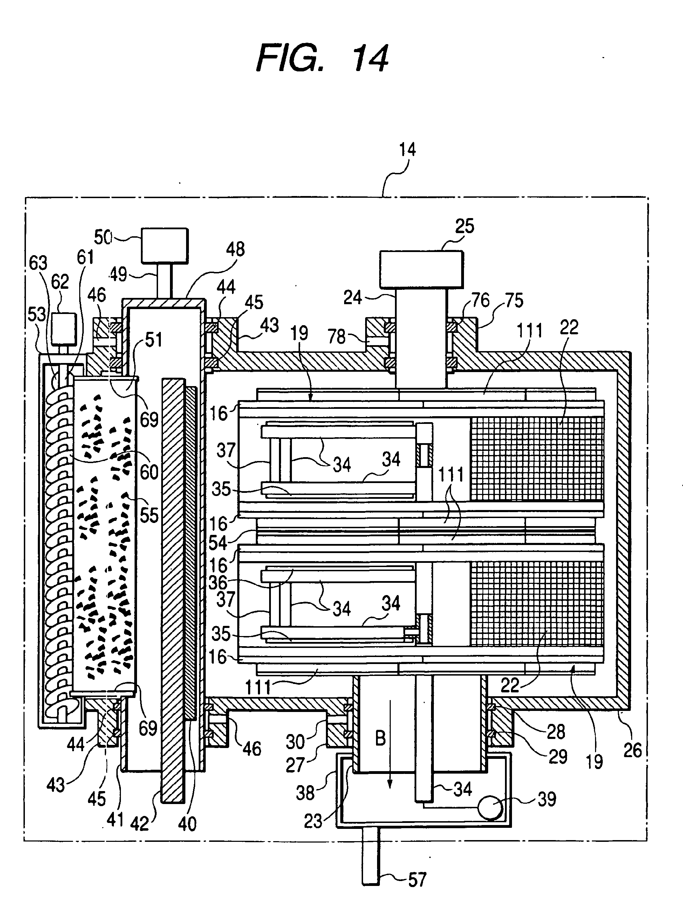

Example 5 of the present invention is illustrated in Figs. 13 and 14. Fig. 13 is a vertical sectional view showing a magnetic separator in this example 5. Fig. 14 is a sectional plan view showing important parts of the magnetic separator in Fig. 13. This example 5 differs from the foregoing Example 1 in the following. The magnetic separator in this example has the drum-like filter unit body 17 which turns together with the gutters 111 tightly fixed to the membrane 15. The advantage of this example is that the gutters 111 receive the washing water containing magnetic flocs which flows down along the surface of the membrane and hence a gutters 111 prevent the membrane 15 under water from decreasing in filtering capacity. The gutters 111 assume a spiral curve expanding outward, so that they form inclined passages in the direction of gravity as the filter unit body 17 rotates clockwise and they push toward the magnets the magnetic flocs 55 which have fallen on the surface of the pretreated water 12 at the time of washing. Operation in this manner transfers with certainty the magnetic flocs 55 to the magnets 40.

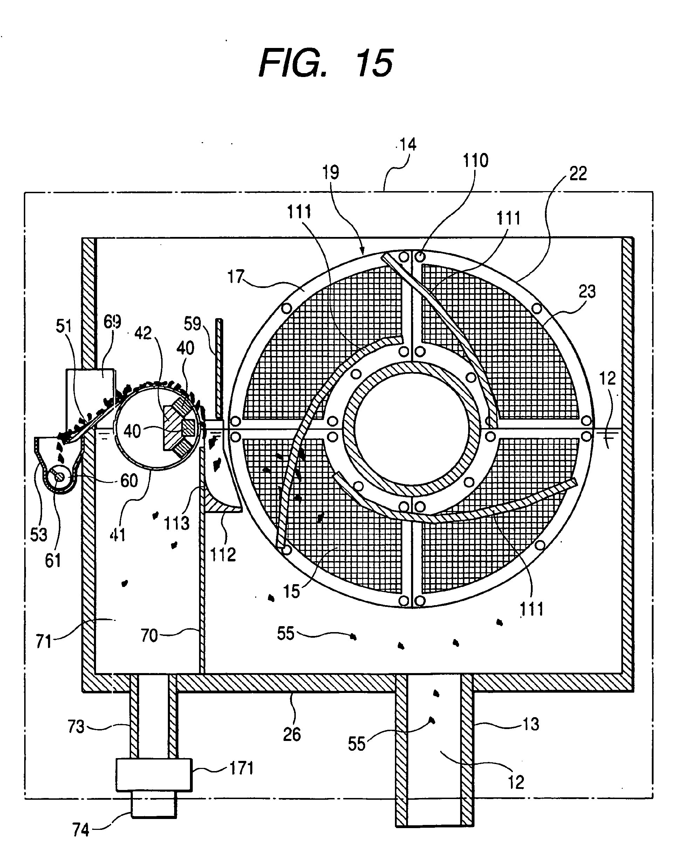

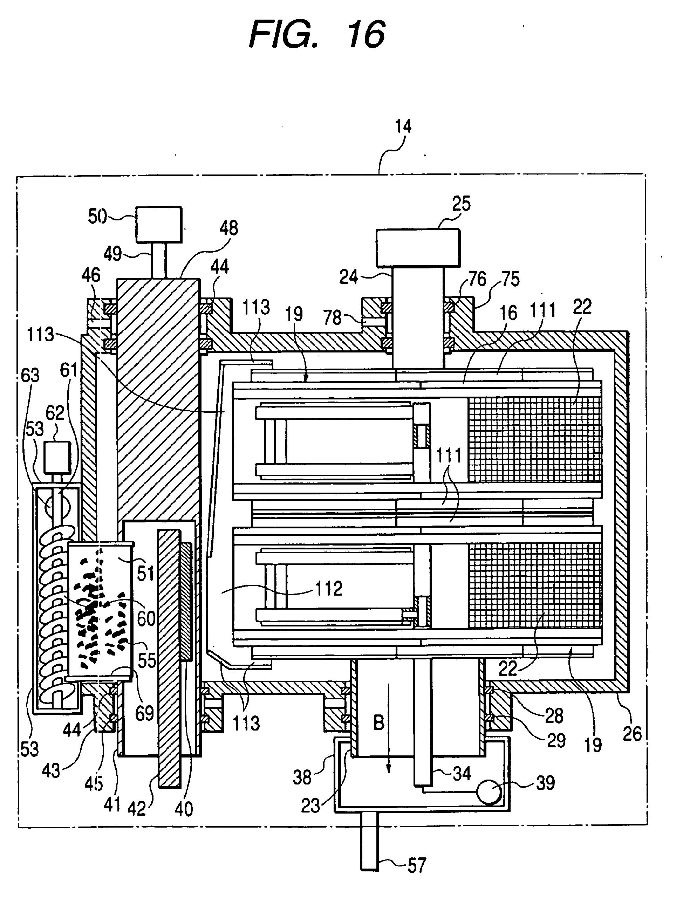

Example 6 of the present invention is illustrated in Figs. 15 and 16. Fig. 15 is a vertical sectional view showing a magnetic separator in this example 6. Fig. 16 is a sectional plan view showing important parts of the magnetic separator in Fig. 15. This example 6 differs from the foregoing Example 5 in the following. The magnetic separator in this example 6 employs short magnets 40 and the guide to collect the washed magnetic flocs 55 in the vicinity of the magnets 40. To be concrete, the magnetic separator has an opening at the part where the washed magnetic flocs 55 are magnetically separated, and the opening is surrounded by the stationary fixed bottom plate 112 and side plates 113. The magnets 40 are arranged within a space corresponding to the opening. The bottom plate 112 has an arced cross section so that it does not permit the magnetic flocs 55 to stay thereon. The bottom plate is inclined from its ends toward the opening, so that the magnetic flocs 55 easily move toward the opening.

The advantage of this example 6 is that the magnetic flocs 55 washed out from the membrane are magnetically separated with certainty and recovered by the cylindrical body 41 because they temporarily collect in the space surrounded by the bottom plate 112 and the side plates 113 and then they are moved to the above-mentioned opening by the rotation of the filter unit 19 and the circulation of the washing water through the space. For this reason, the magnets 40 can be made short and hence the cost of the magnets 40 can be reduced. The reduced magnet size has a pronounced effect on cost reduction in the case of expensive superconducting magnets. The short magnets 40 permit the sludge vessel 53 and the screw conveyor with blades 60 to work satisfactorily even though they are reduced in length. This leads to a reduction in investment.

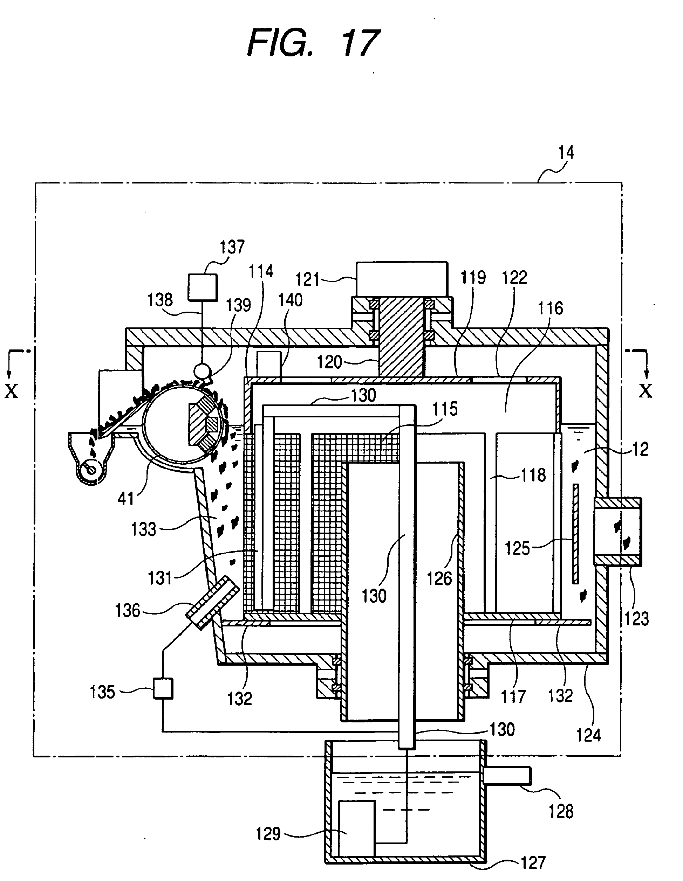

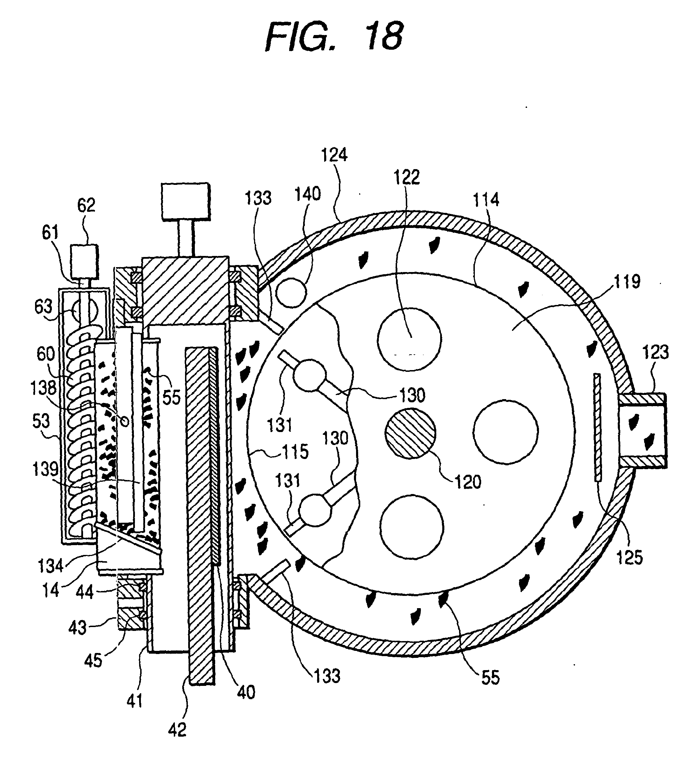

Example 7 of the present invention is illustrated in Figs. 17 and 18. Fig. 17 is a vertical sectional view showing the membrane separator in this example 7. Fig. 18 is a sectional view taken along the line X-X in the direction of arrows in Fig. 17. This example 7 differs from the foregoing Example 1 in the following.

The magnetic separator of this example 7 is constructed of a membrane 115 to filter out the magnetic flocs 55 and the cylindrical body 41 to recover the magnetic flocs 55. The membrane 115 rotates on a vertical axis and the cylindrical body 41 rotates on a horizontal axis. The membrane 115 is attached to almost the entire surface of the circumference of a drum-like filter unit body 114. The filter unit 114 is constructed of a cylindrical wall 116 (which is above the level of the pretreated water 12), a bottom plate 117 (which is in the pretreated water 12), a upper plate 119 (which is above the cylindrical wall 116), and a frame 118 (which joins together the cylindrical wall 116 and the bottom plate 117). The upper plate 119 is turned by a rod 120 connected to a motor 121. The upper plate 119 has a ventilating holes 122.

The pretreated water 12 is introduced into a outer vessel 124 through a pipe 123 and then distributed around the filter unit body 114 by the baffle 125. Themagnetic flocs 55 are filtered out by the membrane 115, and the filtrate (purified water) passes through the membrane 115 and enters a hollow shaft 126 from the top thereof. The purified water is temporality stored in a water tank 127 and then discharged from the water tank 127 from a upper outlet 128. A pump 129 is placed on the bottom of the water tank 127 and below the upper outlet 128. The purified water is partly used as washing water. The washing water is supplied under pressure to washing water pipes 130 by the pump 129. The washing water supplied through the washing water pipe 130 is sprayed toward the membrane 115 from nozzles 131.

The sprayed washing water removes the magnetic flocs 55 from the membrane 115. The removed magnetic flocs 55 are collected in the space surrounded by side walls 133 and a elastic annular plate 132 of hard rubber attached to the bottom plate 117. Part of the washing water is supplied to a nozzle 136 by a pump 135, so that an upward water flow is produced in the space and the magnetic flocs 55 are transferred to the magnets 40 without staying in the space. Thus, the magnetic flocs 55 are magnetically separated by the magnets 40 and recovered by the cylindrical body 41. The recovered magnetic flocs 55 are transferred to the sludge vessel 53 by the side wall guide 134. Incidentally, the pump 135 may be replaced by a bubbler. Water containing fine bubbles positively floats the magnetic flocs, thereby preventing the magnetic flocs from staying. The magnetic flocs collected on the surface of the cylindrical body 41 may be dewatered by blowing compressed air (produced by a blower 137) toward the cylindrical body 41 from a nozzle 139 through a pipe 138. The thus removed water is returned to the pretreated water 12.

The magnetic separator 14 has a underwater UV lamp 140 which irradiates the washed surface of the rotatable membrane 115 with UV light, thereby sterilizing microorganisms living on the membrane and preventing the membrane from being clogged with microorganisms.

The advantage of this example is that the drum-like filter unit body 114 has the membrane 115 attached to the circumference thereof such that the membrane 115 is entirely immersed in the pretreated water 12. This arrangement provides a large filtering area and hence increases the treating capacity. The space formed on part of the circumference of the membrane 115 permits all the magnetic flocs to be recovered by magnetic separation. Therefore, the magnets 40 perform magnetic separation satisfactorily even though their length is reduced. This leads to a cost saving of the magnets 40. The short magnets 40 permit the sludge vessel 53 and the screw conveyor with blades 60 to work satisfactorily even though they are reduced in length. This leads to a reduction in investment. The washed magnetic flocs 55 are moved by supplying part of the washing water to the outside of the membrane so that the magnetic flocs 55 are entirely and easily recovered by magnetic separation without staying. Jetting compressed air toward the outside of the cylindrical body 41 from the nozzle 139 removes water from the magnetic flocs 55 being recovered, and the removed water is returned to the pretreated water 12. This procedure further decreases the water content and volume of the recovered sludge.

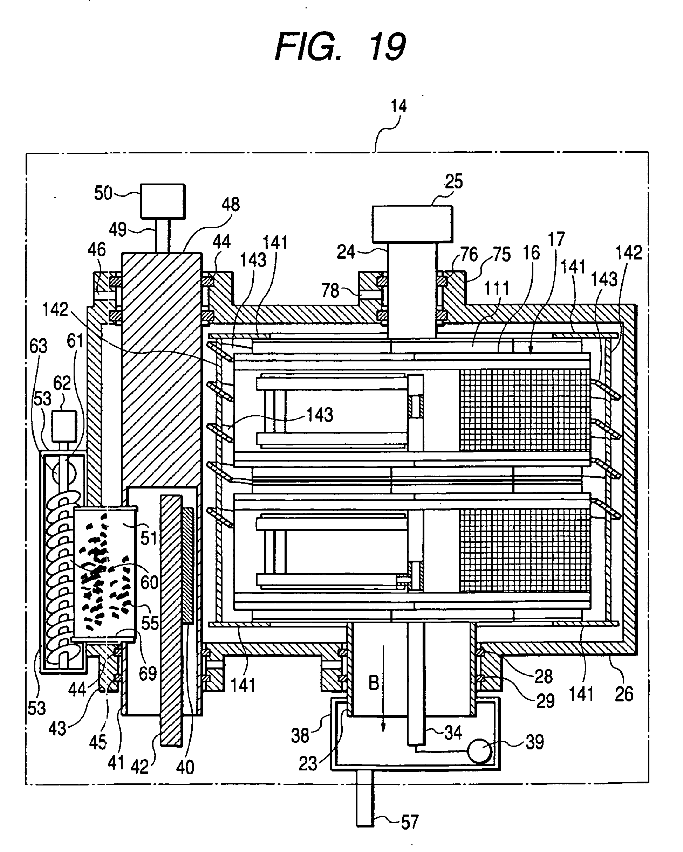

Example 8 of the present invention is illustrated in Fig. 19, which is a vertical sectional view showing the membrane separator in this example 8. This example 8 differs from the foregoing Example 1 in the following. In this example 8, the rotation of the filter unit body 17 is utilized to collect the washed magnetic flocs 55 in the area where the magnets 40 produce the magnetic field for separation. The filter unit body 17 has the gutters 111 on both sides thereof. The gutters 111 are integrated with the annular plates 141. The annular plate 141 has several supports 142 to which is attached the spiral collecting plates 143. The gutters 111, the collecting plates 143, and the annular plates 141 rotate all together, such that the washing water flows out through the upper gutters 111 in Fig. 19 and the washing water is pushed to the magnets 40 by the collecting plates 143 through the surface of the pretreated water 12. Thus the magnetic flocs 55 are entirely separated from the pretreated water 12 by the magnets 40. The advantage of this example is that the rotation of the filter unit body 17 moves the magnetic flocs 55 toward the magnets 40. This leads to a cost reduction of the magnets 40.

In each of the above-mentioned examples, the magnetic flocs 55 are formed by incorporation with triiron tetraoxide. However, it is possible to magnetically separate flocs without triiron tetraoxide if the magnets produce a very strong magnetic field and magnetic gradient, because ferric hydroxide (which functions as the matrix of flocs to be formed by the iron-based coagulant) has weak magnetism. In this case, the reaction vessel 94 shown in Fig. 12 is not necessary.

In each of the above-mentioned examples, permanent magnets are used as the magnetic field generating means. However, permanent magnets may be replaced by magnets of oxide superconducting material of bismuth, samarium, or gadolinium which are magnetized after cooling. Such magnets produce a larger magnetic field which permits more efficient separation and recovery of magnetic flocs with a less amount of magnetic powder. Another magnetic field generating means is a superconducting coil which produces a strong magnetic field in a thin long space resembling a race track.

The magnetic separator of the present invention separates a large amount of suspended solids from raw water efficiently and certainly and discharges concentrated sludge with a low water content.

## Claims

1. A magnetic separator (14) which comprises
- a means (7) to form pretreated water (12) in which suspended solids are changed into magnetic flocs (55) by incorporation of a magnetic substance and a coagulant into raw water (6) containing suspended solids to be removed,
- a means (40) to generate a magnetic field to be applied to the magnetic flocs (55) transferred by a transfer means (54, 59),
- a means (51) to scrape off the magnetic flocs (55) and
- a means (53, 60, 61) to recover the scraped magnetic flocs (55),
**characterized by**
- a means (15, 22, 81, 85, 115) to filter the pretreated water (12) which has openings too small for the magnetic flocs (55) in pretreated water (12) to pass through,
- a washing means (35, 36, 37) to remove the magnetic flocs (55) accumulating on the filtering means (15, 22, 81, 85, 115) from the surface of the filtering means (15, 22, 81, 85, 115) by fluid force,
- said means (54, 59) to transfer the magnetic flocs (55) removed from the filtering means (15, 22, 81, 85, 115) to the magnetic field generating means (40),
- a means (41) to capture the transferred magnetic flocs (55) and to move the captured solids from the part where there exists a strong magnetic field generated by said magnetic field generating means (40) to the part where there exists a weak magnetic field generated by said magnetic field generating means (40),
wherein the means (51) to scrape off the magnetic flocs (55) are applied to the capturing and moving means (41) which have been transferred to the part where there exists a weak magnetic field.

2. A magnetic separator as defined in claim 1, wherein the filtering means (15, 22, 81, 85, 115) consists of a drum-like filter unit (19, 114) rotatably arranged in multiple stages, wherein the filter unit (19, 114) is provided for filtering pretreated water (12) through its side and circumferential surface.

3. A magnetic separator as defined in claim 2, wherein the washing means (35, 36, 37) are arranged inside the filter unit (19) above the level of the pretreated water (12), and the transfer means are arranged above the surface of pretreated water (12) and has an inclined gutter (54) which leads the washing water used to wash the filtering means (15, 22, 81, 85, 115) above the surface of pretreated water (12) and the removed suspended solids to the circumference of the filtering means (15, 22, 81, 85, 115).

4. A magnetic separator as defined in claim 2, wherein the transfer means is a gutter (111), which is integrated with the filtering means (15) and rotates together with the filtering means (15).

5. A magnetic separator as defined in claim 2, wherein the drum-like filter unit (114) is rotatable on a vertical axis and immersed in the pretreated water (12), wherein said magnetic field generating means (40) extends in the direction perpendicular to the axis of rotation of the filtering means (115).

6. A magnetic separator as defined in one of the claims 1 to 3, wherein the filtering means (15, 22, 81, 85) are composed of membranes arranged in multiple layers with a gap placed between them, said membranes differing in mesh size so that they filter off magnetic suspended solids differing in size in pretreated water (12), said membranes being arranged in the order of mesh size with the outermost one having the largest mesh size.

7. A magnetic separator as defined in claim 1, which further comprises a flow regulating means (90, 91) arranged between the capturing and moving means (41) and the filtering means (15, 22, 81, 85, 115).

8. A magnetic membrane separator as defined in claim 1, wherein the magnetic field generating means (40) is shorter than the width for filtration of the filtering means (15, 22, 81, 85, 115) or the width for the washing water flowing out of the washing means (35, 36, 37), and which further comprises a guide means (112, 113) to guide the solids removed from the filtering means (15, 22, 81, 85, 115) toward the magnetic field generating means (40).

## Patentansprüche

1. Magnetabscheider (14)
- mit einer Einrichtung (7) zur Bildung von vorbehandeltem Wasser (12), in welcher suspendierte Feststoffe in magnetische Flocken (55) umgewandelt werden, indem eine magnetische Substanz und ein Koagulans in Rohwasser (6) eingeschlossen werden, das zu entfernende suspendierte Feststoffteilchen enthält,
- mit einer Einrichtung (40) zum Erzeugen eines Magnetfelds, das an die magnetischen Flocken (55) angelegt wird, die von einer Überführungseinrichtung (54, 59) überführt werden,
- mit einer Einrichtung (51) zum Abkratzen der magnetischen Flocken (55) und
- mit einer Einrichtung (53, 60, 61) zum Wiedergewinnen der abgekratzten magnetischen Flocken (55),
**gekennzeichnet**
- **durch** eine Einrichtung (15, 22, 81, 85, 115) zum Filtern des vorbehandelten Wassers (12), die Öffnungen hat, die für die magnetischen Flocken (55) in dem vorbehandelten Wasser (12) für einen Durchgang zu klein sind,
- **durch** eine Wascheinrichtung (35, 36, 37) zum Entfernen der sich auf der Filtereinrichtung (15, 22, 81, 85, 115) von der Oberfläche der Filtereinrichtung (15, 22, 81, 85, 115) aus ansammelnden magnetischen Flocken (55) durch eine Fluidkraft,
- wobei die Überführungseinrichtung (54, 59) die von der Filtereinrichtung (15, 22, 81, 85, 115) entfernten magnetischen Flocken (55) zu der ein Magnetfeld erzeugenden Einrichtung (40) überführt, und
- **durch** eine Einrichtung (41) zum Fangen der überführten magnetischen Flocken (55) und zum Bewegen der gefangenen Feststoffe aus dem Teil, wo ein starkes Magnetfeld vorhanden ist, das von der ein Magnetfeld erzeugenden Einrichtung (40) erzeugt wird, zu dem Teil, wo ein schwaches Magnetfeld vorhanden ist, das von der ein Magnetfeld erzeugenden Einrichtung (40) erzeugt wird,
- wobei die Einrichtung (51) zum Abkratzen der magnetischen Flocken (55), die zu dem Teil überführt worden sind, wo ein schwaches Magnetfeld vorhanden ist, an der Einrichtung (41) zum Einfangen und Bewegen angelegt ist.

2. Magnetabscheider nach Anspruch 1, bei welchem die Filtereinrichtung (15, 22, 81, 85, 115) aus einer trommelartigen Filtereinheit (19, 114) besteht, die in mehreren Stufen drehbar angeordnet und für das Filtern von vorbehandeltem Wasser (12) durch seine Seiten- und die Umfangsfläche hindurch vorgesehen ist.

3. Magnetabscheider nach Anspruch 2, bei welchem die Wascheinrichtung (35, 36, 37) innerhalb der Filtereinheit (19) über dem Pegel des vorbehandelten Wassers (12) angeordnet ist und die Überführungseinrichtung über der Oberfläche des vorbehandelten Wassers (12) angeordnet ist und eine geneigte Rinne (54) hat, die das zum Waschen der Filtereinrichtung (15, 22, 81, 85, 115) verwendete Waschwasser über der Oberfläche des vorbehandelten Wassers (12) und die entfernten suspendierten Feststoffe zu dem Umfang der Filtereinrichtung (15, 22, 81, 85, 115) führt.

4. Magnetabscheider nach Anspruch 2, bei welchem die Überführungseinrichtung eine Rinne (111) ist, die ein Stück mit der Filtereinrichtung (15) bildet und sich zusammen mit der Filtereinrichtung (15) dreht.

5. Magnetabscheider nach Anspruch 2, bei welchem die trommelförmige Filtereinheit (114) auf einer vertikalen Achse drehbar und in das vorbehandelte Wasser (12) untergetaucht ist, wobei die das Magnetfeld erzeugende Einrichtung (40) sich in der Richtung senkrecht zur Drehachse der Filtereinrichtung (115) erstreckt.

6. Magnetabscheider nach einem der Ansprüche 1 bis 3, bei welchem die Filtereinrichtung (15, 22, 81, 85) aus Membranen zusammengesetzt ist, die in mehreren Schichten mit einem dazwischen vorgesehenen Spalt angeordnet sind und in der Maschengröße so differieren, dass sie magnetisch suspendierte Feststoffe abfiltern, die sich in der Größe in dem vorbehandelten Wasser (12) unterscheiden, wobei die Membranen in der Reihenfolge der Maschengröße so angeordnet sind, dass die äußerste die weiteste Maschengröße hat.

7. Magnetabscheider nach Anspruch 1, welcher weiterhin eine Durchsatzreguliereinrichtung (90, 91) aufweist, die zwischen der Einrichtung (41) für das Einfangen und Bewegen und der Filtereinrichtung (15, 22, 81, 85, 115) angeordnet ist.

8. Magnetabscheider nach Anspruch 1, bei welchem die das magnetische Feld erzeugende Einrichtung (40) kürzer als die Filtrierbreite der Filtereinrichtung (15, 22, 81, 85, 115) oder als die Breite für das Waschwasser ist, das aus der Wascheinrichtung (35, 36, 37) abfließt, und welcher weiterhin eine Führungseinrichtung (112, 113) zum Führen der von der Filtereinrichtung (15, 22, 81, 85, 115) entfernten Feststoffe zu der das Magnetfeld erzeugenden Einrichtung (40) hin aufweist.

## Revendications

1. Séparateur magnétique (14), qui comporte
- des moyens (7) pour former de l'eau prétraitée dans laquelle des matières solides suspendues (12) sont changées en flocons magnétiques (55) par incorporation d'une substance magnétique et d'un coagulant dans de l'eau non traitée (6) contenant des matières solides suspendues à enlever,
- des moyens (40) pour générer un champ magnétique à appliquer aux flocons magnétiques (55) transférés par des moyens de transfert (54, 59),
- des moyens (51) pour racler les flocons magnétiques (55) et
- des moyens (53, 60, 61) pour récupérer les flocons magnétiques raclés (55),
**caractérisé par**
- des moyens (15, 22, 81, 85, 115) pour filtrer l'eau prétraitée (12) qui ont des ouvertures trop petites pour que les flocons magnétiques (55) dans l'eau prétraitée (12) passent à travers celles-ci,
- des moyens de lavage (35, 36, 37) pour enlever les flocons magnétiques (55), s'accumulant sur les moyens de filtrage (15, 22, 81, 85, 115), de la surface des moyens de filtrage (15, 22, 81, 85, 115) par une force hydraulique,
- lesdits moyens (54, 59) pour transférer les flocons magnétiques (55) enlevés des moyens de filtrage (15, 22, 81, 85, 115) vers les moyens générateurs de champ magnétique (40),
- des moyens (41) pour capturer les flocons magnétiques transférés (55) et pour déplacer les matières solides capturées de la partie où il existe un champ magnétique fort généré par lesdits moyens générateurs de champ magnétique (40) vers la partie où il existe un champ magnétique faible produit par lesdits moyens générateurs de champ magnétique (40),
dans lequel les moyens (51) pour racler les flocons magnétiques (55) sont appliqués aux moyens de capture et de déplacement (41) qui ont été transférés à la partie où il existe un champ magnétique faible.

2. Séparateur magnétique selon la revendication 1, dans lequel les moyens de filtrage (15, 22, 81, 85, 115) se composent d'une unité formant filtre analogue à un tambour (19, 114) agencée de manière rotative en plusieurs étapes, dans lequel l'unité formant filtre (19, 114) est prévue pour filtrer l'eau prétraitée (12) à travers sa surface latérale et circonférentielle.

3. Séparateur magnétique selon la revendication 2, dans lequel les moyens de lavage (35, 36, 37) sont agencés à l'intérieur de l'unité formant filtre (19) au-dessus du niveau de l'eau prétraitée (12), et les moyens de transfert sont agencés au-dessus de la surface de l'eau prétraitée (12) et ont une gouttière inclinée (54) qui mène l'eau de lavage utilisée pour laver les moyens de filtrage (15, 22, 81, 85, 115) au-dessus de la surface de l'eau prétraitée (12), et les matières solides suspendues enlevées vers la circonférence des moyens de filtrage (15, 22, 81, 85, 115).

4. Séparateur magnétique selon la revendication 2, dans lequel les moyens de transfert sont une gouttière (111), qui est intégrée avec les moyens de filtrage (15) et qui tourne en même temps que les moyens de filtrage (15).

5. Séparateur magnétique selon la revendication 2, dans lequel l'unité formant filtre analogue à un tambour (114) peut tourner sur un axe vertical et est immergée dans l'eau prétraitée (12), dans lequel lesdits moyens générateurs de champ magnétique (40) s'étendent dans la direction perpendiculaire à l'axe de rotation des moyens de filtrage (115).

6. Séparateur magnétique selon l'une quelconque des revendications 1 à 3, dans lequel les moyens de filtrage (15, 22, 81, 85) se composent de membranes agencées dans des couches multiples avec un espace placé entre elles, lesdites membranes ayant une taille de maille différente, de sorte qu'elles séparent par filtration les matières solides suspendues magnétiques d'une taille différente dans l'eau prétraitée (12), lesdites membranes étant agencées dans l'ordre des tailles de maille, la plus à l'extérieur ayant la plus grande taille de maille.

7. Séparateur magnétique selon la revendication 1, qui comporte en outre des moyens de régulation d'écoulement (90, 91) agencés entre les moyens de capture et de déplacement (41) et les moyens de filtrage (15, 22, 81, 85, 115).

8. Séparateur magnétique à membrane selon la revendication 1, dans lequel les moyens générateurs de champ magnétique (40) sont plus courts que la largeur de filtration des moyens de filtrage (15, 22, 81, 85, 115) ou la largeur pour l'eau de lavage s'écoulant hors des moyens de lavage (35, 36, 37), et comportant en outre les moyens de guidage (112, 113) pour guider les matières solides enlevées des moyens de filtrage (15, 22, 81, 85, 115) vers les moyens générateurs de champ magnétique (40).
